# EUROPÄISCHE PATENTSCHRIFT

(11) **EP 1 537 350 B1**
(45) Veröffentlichungstag und Bekanntmachung des Hinweises auf die Patenterteilung: **20.01.2010**
(21) Anmeldenummer: 03748001.9
(22) Anmeldetag: 11.09.2003
(51) Int. Cl.: F16L 11/08

(54) **SANITÄRSCHLAUCH**
SANITARY HOSE
TUYAU SANITAIRE

(30) Priorität: 14.09.2002 DE 10242815
(43) Veröffentlichungstag der Anmeldung: 08.06.2005
(73) Patentinhaber: Hansgrohe AG, 77761 Schiltach (DE)
(72) Erfinder: AKALTAN, Zafer, 77761 Schiltach (DE)
(74) Vertreter: Patentanwälte Ruff, Wilhelm, Beier, Dauster & Partner
(86) Internationale Anmeldenummer: PCT/EP2003/010076
(87) Internationale Veröffentlichungsnummer: WO 2004/027304

(56) Entgegenhaltungen:
- EP-A- 0 685 676
- EP-A- 0 863 352
- DE-A- 3 017 326

## Beschreibung

Die Erfindung betrifft einen Sanitärschlauch bestehend aus einem Innenschlauch und einem glatten Außenschlauch aus mindestens teilweise durchsichtigem Kunststoff mit einer Einfärbung zwischen den Schläuchen.

Die klassischen Metallschläuche mit einem im Innern befindlichen Gummischlauch wurden im Sanitärbereich weitgehend durch Kunststoffschläuche verdrängt. Trotzdem ist sowohl die silbrig metallisch glänzende Oberfläche, wie auch der dreidimensionale optische Effekt einer Metallummantelung nach wie vor sehr beliebt, weil die Sanitärarmaturen häufig aus chromfarbenen Kunststoff oder verchromtem Messing bestehen. Sanitäre Kunststoffschläuche (vgl. DE 30 17 326) besitzen häufig eine Durchmesserverstärkung in Form einer Kunststoffwendel aus Hartplastik, die sowohl die Knicksteifigkeit als auch die Berstsicherheit erhöht. Solche Verstärkungswendel können in glänzender Metallfarbe ausgestaltet sein und in gewisser Weise an die klassischen Metallschläuche erinnern. Derzeit existieren auch im wesentlichen glatte Sanitärschläuche mit einer metallisch silbrigen Oberfläche (DE 44 19 120).

Es ist wünschenswert, Sanitärschläuche aus Kunststoff mit einer glatten Oberfläche zu schaffen, welche den dreidimensionalen optischen Eindruck eines klassischen Metallschlauches vermitteln.

Zu diesem Zweck wurden die wendelverstärkten Schläuche mit einem durchsichtigen Außenschlauch versehen. Hohlräume zwischen Innen- und Außenschlauch im Bereich zwischen den Gängen der Wendel erzeugen eine dreidimensionale Optik.

Die Erfindung löst diese Aufgabe durch einen Sanitärschlauch, bestehend aus einem Innenschlauch und einem glatten Außenschlauch aus mindestens teilweise durchsichtigem Kunststoff mit einer Einfärbung in Form einer Metallisierung zwischen den Schläuchen, **dadurch gekennzeichnet, dass** er auf der eingefärbten Außenseite des Innenschlauches mindestens eine dünne, im wesentlichen nicht auftragende, mindestens einschichtige wendelförmige Umwicklung aufweist, welche die eingefärbte Oberfläche des Innenschlauches teilweise verdeckt, der Schlauch auf seiner Oberfläche eine schwach ausgebildete Strutkur von sehr geringen, kaum spürbaren, wendelförmig umlaufenden Vertiefungen aufweist, die auf die Zwischenräume zwischen den Gängen der wendelförmigen Umwicklung in Form eines dünnen, schmalen Bandes über die gesamte Länge des Schlauches zurückzuführen sind, und kein Hohlraum zwischen Außenschlauch und Innenschlauch vorhanden ist. Eine solche Umwicklung besitzt optisch eine andere Oberfläche als die Einfärbung. Allein schon durch die Wechselwirkung der Oberflächen der Umwicklung und der des Innenschlauches entsteht ein dreidimensionaler optischer Effekt. Dieser entspricht, insbesondere bei einer silberfarbigen Umwicklung, dem eines klassischen Metallschlauches.

Ein Vorteil des erfindungsgemäßen Sanitärschlauches besteht insbesondere darin, dass sowohl ein starker optischer 3D-Effekt erzielt wird als auch gleichzeitig der Sanitärschlauch eine im wesentlichen glatte Oberfläche besitzt. Ein weiterer Vorteil dieses optischen Effektes des erfindungsgemäßen Sanitärschlauches besteht darin, dass der Außenschlauch nahezu unmittelbar auf der wendelförmigen Umwicklung und dem Innenschlauch aufliegt und keine Hohlräume vorhanden sind, in welche im Falle einer Beschädigung des Außenschlauches Wasser eindringen könnte und sich anschließend Verfärbungen bilden könnten. Der erfindungsgemäße Schlauch verbindet die technischen Vorteile eines in der Oberfläche im wesentlichen glatten Schlauches, insbesondere im Bereich der Befestigung der Nippel, mit dem nach wie vor gewünschten optischen Effekt eines klassischen Metallschlauches mit einem dreidimensionalen Berg- und Tal-Profil. Die Umwicklung umfasst vorzugsweise ein dünnes mindestens einschichtiges Band.

Aufgrund der sehr geringen Stärke der wendelförmigen Umwicklung entsteht kein Hohlraum zwischen dem Außenschlauch und dem Innenschlauch in den Bereichen zwischen zwei Umwicklungen. Dadurch könne die Anschlussnippel ohne Probleme dicht und zugfest befestigt werden.

Bei der eingefärbten Außenseite des Innenschlauches handelt es sich um eine Metallisierungsschicht. Die Einfärbung kann in Form einer metallisierten, insbesondere bedampften, Heißprägefolie vorliegen oder durch direkte Einfärbung, insbesondere Bedampfung, des Innenschlauches vorgesehen sein. Der Innenschlauch kann in der Wandung zur Erzielung der gewünschten Innendruckfestigkeit in bekannter Weise verstärkt sein. Der Innenschlauch kann selbst aus zwei Schichten bestehen und zwischen den beiden Schichten kann sich eine geflechtartige textile Verstärkung befinden.

Gemäß einer Ausführungsform der vorliegenden Erfindung besitzt die dünne wendelförmige Umwicklung eine derartige Zugfestigkeit, dass der Innenschlauch eine zusätzliche radiale Stabilisierung besitzt ohne dass seine Flexibilität durch die wendelförmige Umwicklung beeinträchtigt wird.

Gemäß einer Ausführungsform besteht die dünne wendelförmige Umwicklung aus mehreren Schichten, wobei sie vorzugsweise mindestens eine Kleberschicht, eine Trägerschicht und/oder eine Farbschicht besitzt. Es ist auch denkbar, dass die wendelförmige Umwicklung eine zusätzliche durchsichtige Ummantelung, vorzugsweise aus Weich-PVC, aufweist. Dies ist insbesondere von Vorteil für den Fall, dass es sich bei der dünnen wendelförmigen Umwicklung um ein Metallband und/oder ein Polyesterband handelt. Durch eine Ummantelung aus dem gleichen Material wie der Innenschlauch und vorzugsweise auch der Außenschlauch, die in der Regel aus Weich-PVC bestehen, ist eine gute Haftung auf der eingefärbten Oberfläche des Innenschlauches sowie der inneren Seite des Außenschlauchs möglich.

Die Trägerschicht der wendelförmigen Umwicklung wird in einer bevorzugten Ausführungsform von einem dünnen Kunststoffband, insbesondere einem Band aus Polyester, gebildet. Es sind jedoch auch Ausführungsformen denkbar, bei der die Trägerschicht aus einem Heißklebefolienband oder aus einem Metallband besteht.

In einer bevorzugten Ausführungsform der Erfindung besteht die Farbschicht der wendelförmigen Umwicklung, insbesondere des dünnen Kunststoffbandes, vorzugsweise aus einer Metallisierungsschicht. Diese Metallisierungsschicht ist vorzugsweise silbrig, insbesondere hochglänzend und kann die gleiche Farbe wie die Einfärbung, insbesondere die Metallisierung, der Oberfläche des Innenschlauches aufweisen und sich im Reflexionsverhalten unterscheiden. Einen besonderen dreidimensionalen Effekt, entsprechend dem eines klassischen Metallschlauches, wird durch die Kombination einer silbrig hochglänzenden Farbschicht der wendelförmigen Umwicklung in Kombination mit einer matt silbrig glänzenden eingefärbten Oberfläche des Innenschlauches durch die besondere Art der unterschiedlichen Lichtreflexionen der hochglänzenden und' der matt glänzenden silbrigen Oberflächen erzielt. Im Falle dieser Kombination entsteht der Eindruck es bestünden Vertiefungen zwischen den einzelnen wendelförmigen Umwicklungen, entsprechend den Vertiefungen eines Metallschlauches. In einer anderen Ausführungsform kann die Farbschicht auch aus einer nichtmetallischen Einfärbung bestehen und durch die Kombination verschiedener Farben der wendelförmigen Umwicklung und der eingefärbten Oberfläche des Innenschlauches können verschiedene Farbeffekte und Kombinationen erzielt werden.

Gemäß der Erfindung ist es auch denkbar, mehrere wendelförmige Umwicklungen auf der Außenseite des Innenschlauches anzubringen. Diese Umwicklungen können rechts- und/oder linksgewendelt angeordnet sein, wobei sich die einzelnen Wendelungen zumindest teilweise überdecken können. Es ist auch eine Ausführungsform denkbar, bei der die verschiedenen Wendelungen unterschiedliche Farben besitzen und dadurch, im Falle teilweiser Überschneidungen, eine geflechtartige Optik ergeben. Es ist insbesondere vorstellbar, verschiedene farbige und metallisierte Oberflächen derart miteinander zu kombinieren, dass sie zu den übrigen verwendeten Armaturen und sonstigen Badezimmereinrichtungsgegenständen farblich angepasst sind.

Die Metallisierungsschicht wird vorzugsweise durch eine Aluminiumbedampfung angebracht. Diese Aluminiumbedampfung kann entweder direkt auf die Oberfläche des Schlauches und/oder der Trägerschicht der wendelförmigen Umwicklung aufgebracht werden oder zunächst auf eine Heißklebefolie aufgedampft werden, welche anschließend auf die Oberfläche des Innenschlauches und/oder die Trägerschicht der wendelförmigen Umwicklung aufgebracht wird.

Gemäß der Erfindung ist die wendelförmige Umwicklung vorzugsweise haftend auf der Oberfläche des Innenschlauches angebracht. In einer bevorzugten Ausführungsform ist die Umwicklung mit der Oberfläche verklebt. Für den Fall, dass die wendelförmige Umwicklung eine Ummantelung, insbesondere aus Weich-PVC, besitzt, ist es gemäß einer weiteren Ausführungsform denkbar, dass die ummantelte wendelförmige Umwicklung durch Hitze mit der Oberfläche des Innenschlauches verbunden, insbesondere verschmolzen oder verschweißt wird.

Im Falle des erfindungsgemäßen Sanitärschlauches wird der Außenschlauch von einer, die gesamte Oberfläche des Innenschlauches überdeckenden dünnen Außenummantelung gebildet. Bei dieser dünnen Außenummantelung handelt es sich vorzugsweise um einen, insbesondere klaren, mindestens teilweise durchsichtigen oder durchscheinenden Schlauch, welcher aus Weich-PVC bestehen kann.

Die Außenummantelung bzw. der Außenschlauch ist vorzugsweise nicht verschieblich mit der Oberfläche der wendelförmigen Umwicklung und des Innenschlauches verbunden. Der Außenschlauch kann mit der Oberfläche der wendelförmigen Umwicklung und des Innenschlauchs verklebt oder verschweißt sein. Es ist auch denkbar, dass die Außenummantelung aufgeschrumpft, insbesondere aufextrudiert, ist.

In einer Ausführungsform beträgt die Wandstärke des gesamten Innenschlauches vorzugsweise 1 bis 5 mm, insbesondere ca. 3 mm. Die Stärke der wendelförmigen Umwicklung beträgt vorzugsweise 0,05 mm bis 0,5 mm, insbesondere 0,1 mm. Der Außenschlauch besitzt mit Vorteil eine Wandstärke von 0,1 mm bis 1 mm, insbesondere von 0,5 mm. Die Wendelförmige Umwicklung besitzt vorzugsweise ein Breite von 1 bis 5 mm, insbesondere ca. 3 mm.

Im folgenden wird die vorliegende Erfindung durch ausführliche Beschreibung einer besonderen Ausführungsform erläutert. In dieser Ausführungsform können einzelne Merkmale der Erfindung allein oder in Kombination mit anderen Merkmalen verwirklicht sein. Die beschriebene besondere Ausführungsform dient lediglich zur Erläuterung und zum besseren Verständnis der Erfindung und ist in keinster Weise einschränkend zu verstehen.

### Figurenbeschreibung

In den Zeichnungen zeigen
- Figur 1:: eine Ausführungsform des erfindungsgemäßen Sanitärschlauches,
- Figur 2:: einen Querschnitt entlang der Längsachse durch eine Ausführungsform des erfindungsgemäßen Sanitärschlauches,
- Figur 3:: einen vergrößert dargestellter Ausschnitt (X), der in Figur 2 dargestellten Ausführungsform.

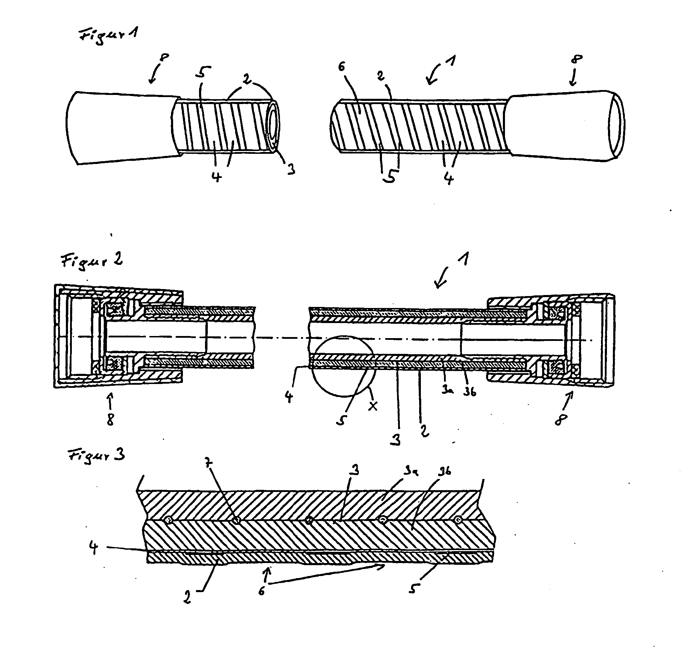

In Figur 1 ist ein flexibler Sanitärschlauch 1 aus Kunststoff dargestellt. Der Sanitärschlauch 1 besitzt eine silbrig farbige glänzende Oberfläche. Der Sanitärschlauch 1 besitzt einen Außenschlauch 2 und einen Innenschlauch 3. Der Innenschlauch 3 besitzt eine matt glänzende silbrige Oberfläche. Auf dieser silbrigen Oberfläche des Innenschlauches 3 befindet sich eine wendelförmige Umwicklung 5, welche eine hochglänzende Oberfläche besitzt. Der Sanitärschlauch 1 weist auf seiner Oberfläche eine schwach ausgebildete Struktur von sehr geringen, kaum spürbaren, wendelförmig umlaufenden Vertiefungen 6 auf, die die Zwischenräume zwischen den Gängen der wendelförmigen Umwicklung 5 in Form eines dünnen schmalen Bandes über die gesamte Länge des Schlauches zurückzuführen sind.

Der Anteil der wendelförmigen Umwicklung 5 an der gesamten Oberfläche des Sanitärschlauches 1 beträgt ca. 30%. Die übrige Oberfläche wird durch die matt silbrig glänzende Oberfläche des Innenschlauches 3 gebildet. Über dem Innenschlauch 3 und der sich darauf befindlichen wendelförmigen Umwicklung 5 befindet sich ein durchsichtiger dünner Außenschlauch 2, welcher im Pass-Sitz auf dem Innenschlauch 3 aufliegt. Die wendelförmige Umwicklung 5 ist derart dünn und nicht auftragend ausgebildet, so dass der Außenschlauch 2 vollständig auf dem Innenschlauch 3 und der wendelförmigen Umwicklung 5 anliegt und keinerlei Hohlräume, insbesondere an den Übergangsstellen von Umwicklung 5 und Innenschlauch 3, gebildet werden. Die silbrige Farbschicht 4 auf der Außenseite des Innenschlauches 3 besteht aus einer Heißprägefolie, welche eine Stärke von ca. 4 µm besitzt und mit Aluminium bedampft ist. Die wendelförmige Umwicklung 5 besteht aus einem ca. 2 mm breiten und ca. 0,1 mm dicken Polyesterband, welches eine aluminiumgedampfte Oberfläche besitzt. Die wendelförmige Umwicklung 5 ist auf die Außenseite des Innenschlauches 3 geklebt. Der Außenschlauch 2 besteht aus einem Weich-PVC Material und besitzt eine Stärke von ca. 0,5 mm und ist mit der wendelförmigen Umwicklung 5 verklebt. Der Innenschlauch 3 besteht ebenfalls aus Weich-PVC und besitzt eine Wandstärke von insgesamt ca. 3 mm.

Figur 2 zeigt einen Querschnitt in Längsrichtung durch den Sanitärschlauch 1. Figur 3 zeigt einen Wandausschnitt (X) in 10-fach vergrößerter Darstellung aus Figur 2. Der Innenschlauch 3 besteht aus zwei Schichten 3a und 3b. Zwischen diesen beiden Schichten befindet sich eine textile geflechtartige Fadenverstärkung 7. Auf der Außenseite des Innenschlauches befindet sich die überproportional dick dargestellte Heißprägefolie mit der Farbschicht 4. Auf der silbrig metallischen Oberfläche des Innenschlauches 3 befindet sich die ca. 2 mm breite wendelförmige Umwicklung 5, wobei die Ganghöhe ca. 6 mm beträgt und der Abstand zwischen zwei Umwicklungen ca. 4 mm beträgt. Über dem Innenschlauch 3 und der sich darauf befindlichen wendelförmigen Umwicklung 5 befindet sich der Außenschlauch 2, welcher vollständig ohne Bildung von Hohlräumen auf der Umwicklung 5 und dem Innenschlauch 3 aufliegt. Auf der Oberfläche des Außenschlauches 2 sind lediglich sehr flache Vertiefungen 6 in der im wesentlichen glatten Oberfläche des Sanitärschlauches 1. An den beiden Enden des Schlauches befindet sich jeweils ein Anschlussnippel 8, welcher aufgrund der im wesentlichen glatten Oberfläche des Sanitärschlauches 1 ohne besondere Vorkehrung zur Herstellung der Dichtigkeit der Anschlüsse angebracht ist.

## Patentansprüche

1. Sanitärschlauch (1) bestehend aus einem Innenschlauch (3) und einem glatten Aussenschlauch (2) aus mindestens teilweise durchsichtigem Kunststoff mit einer Einfärbung (4) in Form einer Metallisierung zwischen den Schläuchen (2) und (3), **dadurch gekennzeichnet, dass** er auf der eingefärbten Aussenseite des Innenschlauches mindestens eine dünne, im wesentlichen nicht tragende, mindestens einschichtige wendelförmige Umwicklung aufweist, welche die eingefärbte Oberfläche des Innenschlauches (3) teilweise verdeckt, der Schlauch (1) auf seiner Oberfläche eine schwach ausgebildete Struktur von sehr geringen, kaum spürbaren, wendelförmig umlaufenden Vertiefungen (6) aufweist, die auf die Zwischenräume zwischen den Gängen der wendelförmigen Umwicklung (5) in Form eines dünnen, schmalen Bandes über die gesamte Länge des Schlauches zurückzuführen sind, und kein Hohlraum zwischen Aussenschlauch (2) und Innenschlauch (5) vorhanden ist.

2. Sanitärschlauch (1) nach Anspruch 1, **dadurch gekennzeichnet, dass** die Einfärbung zwischen dem Innenschlauch und dem Aussenschlauch (2) eine Metallisierung in Form einer Heißprägefolie ist.

3. Sanitärschlauch (1) nach Anspruch 1 oder 2, **dadurch gekennzeichnet, dass** die dünne wendelförmige Umwicklung (5) eine derartige Festigkeit aufweist, dass der Innenschlauch (3) eine zusätzliche radiale Stabilisierung besitzt.

4. Sanitärschlauch (1) nach einem der vorhergehenden Ansprüche, **dadurch gekennzeichnet, dass** die dünne wendelförmige Umwicklung (5) mehrere Schichten, insbesondere mindestens eine Kleberschicht, eine Trägerschicht und/oder eine Farbschicht, aufweist.

5. Sanitärschlauch (1) nach einem der vorhergehenden Ansprüche, **dadurch gekennzeichnet, dass** die wendelförmige Umwicklung (5) eine Trägerschicht aus einem dünnen Kunststoffband, vorzugsweise aus Polyester, einem Heißklebefolienband und/oder einem Metallband aufweist.

6. Sanitärschlauch (1) nach einem der vorhergehenden Ansprüche, **dadurch gekennzeichnet, dass** die wendelförmige Umwicklung (5), insbesondere das dünne Kunststoffband, eine Farbschicht, vorzugsweise eine Metallisierungsschicht, insbesondere der gleichen Farbe wie die Einfärbung (4) auf der Oberfläche des Innenschlauches (3), aufweist.

7. Sanitärschlauch (1) nach einem der vorhergehenden Ansprüche, **dadurch gekennzeichnet, dass** mehrere Umwicklungen auf der Außenseite des Innenschlauches (3) rechts- und/oder linksgewendelt angeordnet sind, insbesondere sich teilweise überdecken.

8. Sanitärschlauch (1) nach einem der vorhergehenden Ansprüche, **dadurch gekennzeichnet, dass** die wendelförmige Umwicklung (5) auf der Oberfläche des Innenschlauches (3) haftend angebracht ist, insbesondere mit der Oberfläche verklebt ist.

9. Sanitärschlauch (1) nach einem der vorhergehenden Ansprüche, **dadurch gekennzeichnet, dass** der Außenschlauch (2) von einer, die gesamte Oberfläche überdeckenden, mindestens teilweise durchsichtigen oder durchscheinenden, vorzugsweise klaren, dünnen Außenummantelung gebildet wird.

10. Sanitärschlauch (1) nach Anspruch 9, **dadurch gekennzeichnet, dass** die Außenummantelung nichtverschieblich mit der Oberfläche der wendelförmigen Umwicklung (5) und des innenschlauchs (3) verbunden ist, vorzugsweise verklebt oder verschweißt ist.

11. Sanitärschlauch (1) nach einem der vorhergehenden Ansprüche, **dadurch gekennzeichnet, dass** er eine im wesentlichen glatte Außenseite aufweist.

12. Sanitärschlauch (1) nach einem der vorhergehenden Ansprüche, **dadurch gekennzeichnet, dass** die Wandstärke des Innenschlauches (3) vorzugsweise 1 bis 5 mm, insbesondere ca. 3 mm beträgt

13. Sanitärschlauch (1) nach einem der vorhergehenden Ansprüche, **dadurch gekennzeichnet, dass** die Stärke der wendelförmigen Umwicklung (5) vorzugsweise 0,05 bis 0,5 mm, insbesondere ca. 0,1 mm, beträgt.

14. Sanitärschlauch (1) nach einem der vorhergehenden Ansprüche, **dadurch gekennzeichnet, dass** die Wandstärke des Außenschlauches (2) vorzugsweise 0,1 bis 1 mm, insbesondere 0,5 mm beträgt.

15. Sanitärschlauch (1) nach einem der vorhergehenden Ansprüche, **dadurch gekennzeichnet, dass** er an seinen Enden mit Anschlussnippeln (8) versehen ist.

## Claims

1. A sanitary hose (1) comprising an internal hose (3) and a smooth external hose (2) made of at least partially transparent plastic with colouring (4) in the form of metallization between the hoses (2) and (3), **characterised in that** it features at least a thin, essentially non-supporting, at least single layered helical wrapping, on the coloured external side of the internal hose, which partially covers the coloured surface of the internal hose (3), whereby the hose (1) features a weak formed structure, on its surface, of very shallow, hardly tangible, helically aligned depressions (6), which are caused by the interstices between the flights of the helical wrapping (5) in the form of a thin, narrow band over the entire length of the hose and no cavity is present between the external hose (2) and internal hose (5).

2. The sanitary hose (1) according to Claim 1 **characterised in that** the colouring between the internal hose and the external hose (2) is metallization in the form of a hot-stamped film.

3. The sanitary hose (1) according to Claim 1 or 2, **characterised in that** the thin helical wrapping (5) features strength such that the internal hose (3) has an additional radial Stabilisation.

4. The sanitary hose (1) according to one of the preceding claims, **characterised in that** the thin helical wrapping (5) features several layers, in particular at least an adhesive layer, a substrate layer and/or a coloured layer.

5. The sanitary hose (1) according to one of the preceding claims, **characterised in that** the helical wrapping (5) features a substrate layer consisting of a thin plastic tape, preferably made of polyester, a hot adhesive film tape and/or a metallic tape.

6. The sanitary hose (1) according to one of the preceding claims, **characterised in that** the helical wrapping (5), in particular the thin plastic tape, features a coloured layer, preferably a metallization layer, in particular of the same colour as the colouring (4) on the surface of the internal hose (3).

7. The sanitary hose (1) according to one of the preceding claims **characterised in that** several wrappings on the external side of the internal hose (3) are disposed helically clockwise and/or counterclockwise, in particular partly overlap one another.

8. The sanitary hose (1) according to one of the preceding claims, **characterised in that** the helical wrapping (5) on the surface of the internal hose (3) is applied adhesively, in particular is bonded with the surface.

9. The sanitary hose (1) according to one of the preceding claims, **characterised in that** the external hose (2) is formed of at least partially transparent or translucent, preferably clear, thin external wrapping that covers the entire surface.

10. The sanitary hose (1) according to Claim 9, **characterised in that** the external wrapping is not displace-ably connected with the surface of the helical wrapping (5) and the internal hose (3), preferably is bonded adhesively or welded.

11. The sanitary hose (1) according to one of the preceding claims **characterised in that** it features an external side that is essentially smooth.

12. The sanitary hose (1) according to one of the preceding claims **characterised in that** the thickness of the internal hose (3) is preferably 1 mm to 5 mm, in particular approximately 3 mm.

13. The sanitary hose (1) according to one of the preceding claims, **characterised in that** the thickness of the helical wrapping (5) is preferably 0.05 to 0.5 mm, in particular approximately 0.1 mm.

14. The sanitary hose (1) according to one of the preceding claims, **characterised in that** the thickness of the external hose (2) is preferably 0.1 to 1 mm, in particular 0.5 mm.

15. The sanitary hose (1) according to one of the preceding claims **characterised in that** it is provided with connection nipples (8) on its ends.

## Revendications

1. Flexible pour sanitaires (1) comprenant un flexible intérieur (3) et un flexible extérieur (2) lisse en une matière plastique au moins partiellement transparente comprenant une coloration (4) en la forme d'une métallisation entre les flexibles (2) et (3), **caractérisé en ce que** sur le côté extérieur teinté du flexible intérieur il présente au moins un enroulement hélicoïdal mince essentiellement non porteur au moins monocouche, enroulement qui recouvre en partie la surface teintée du flexible intérieur (3), **en ce que** le flexible (1) présente sur sa surface une structure faiblement accusée composée de creux (6) très faibles à peine perceptibles ayant un tracé hélicoïdal, imputables aux espaces qui séparent les pas de l'enroulement (5) hélicoïdal sous la forme d'un ruban mince et étroit sur toute la longueur du flexible, et **en ce qu'**il n'y a pas de cavité entre le flexible extérieur (2) et le flexible intérieur (5).

2. Flexible pour sanitaires (1) selon la revendication 1, **caractérisé en ce que** la coloration entre le flexible intérieur et le flexible extérieur (2) est constituée par une métallisation en forme de feuille gaufrée à chaud.

3. Flexible pour sanitaires (1) selon la revendication 1 ou 2, **caractérisé en ce que** l'enroulement (5) hélicoïdal mince présente une solidité telle que le flexible intérieur (3) possède une stabilisation radiale supplémentaire.

4. Flexible pour sanitaires (1) selon l'une des revendications précédentes, **caractérisé en ce que** l'enroulement (5) hélicoïdal mince présente plusieurs couches, notamment au moins une couche de colle, une couche support et/ou une couche colorée.

5. Flexible pour sanitaires (1) selon l'une des revendications précédentes, **caractérisé en ce que** l'enroulement (5) hélicoïdal présente une couche support composée d'un ruban mince en matière plastique, de préférence en polyester, une bande foliaire collée à chaud et/ou une bande métallique.

6. Flexible pour sanitaires (1) selon l'une des revendications précédentes, **caractérisé en ce que** l'enroulement (5) hélicoïdal, en particulier la bande mince en matière plastique, présente une couche colorée, de préférence une couche métallisée notamment de même couleur que la coloration (4) sur la surface du flexible intérieur (3).

7. Flexible pour sanitaires (1) selon l'une des revendications précédentes, **caractérisé en ce que** plusieurs enroulements hélicoïdaux ont été disposés en sens horaire et/ou antihoraire sur le côté extérieur du flexible intérieur (3), et que notamment ils se recouvrent en partie.

8. Flexible pour sanitaires (1) selon l'une des revendications précédentes, **caractérisé en ce que** l'enroulement hélicoïdal (5) est fixé adhérent sur la surface du flexible intérieur (3), en particulier qu'il est collé contre la surface.

9. Flexible pour sanitaires (1) selon l'une des revendications précédentes, **caractérisé en ce que** le flexible extérieur (2) est formé par une gaine extérieure mince, au moins partiellement transparente ou translucide, de préférence claire, recouvrant toute la surface.

10. Flexible pour sanitaires (1) selon la revendication 9, **caractérisé en ce que** la gaine extérieure est reliée de façon non déplaçable avec la surface de l'enroulement (5) hélicoïdal et du flexible intérieur (3), qu'elle est de préférence collée ou soudée.

11. Flexible pour sanitaires (1) selon l'une des revendications précédentes, **caractérisé en ce qu'**il présente une surface extérieure essentiellement lisse.

12. Flexible pour sanitaires (1) selon l'une des revendications précédentes, **caractérisé en ce que** la paroi du flexible intérieur (3) présente une épaisseur comprise de préférence entre 1 et 5 mm, notamment d'env. 3 mm.

13. Flexible pour sanitaires (1) selon l'une des revendications précédentes, **caractérisé en ce que** l'enroulement hélicoïdal (5) présente une épaisseur comprise de préférence entre 0,05 et 0,5 mm, notamment d'env. 0,1 mm.

14. Flexible pour sanitaires (1) selon l'une des revendications précédentes, **caractérisé en ce que** le flexible extérieur (2) présente une épaisseur de paroi comprise de préférence entre 0,1 et 1 mm, notamment de 0,5 mm.

15. Flexible pour sanitaires (1) selon l'une des revendications précédentes, **caractérisé en ce qu'**il est doté, en ses extrémités, de nipples (8) de raccordement.
